(19) Europäisches Patentamt
European Patent Office
Office européen des brevets

(11) Veröffentlichungsnummer : **0 072 534**
**B1**

(12) **EUROPÄISCHE PATENTSCHRIFT**

(45) Veröffentlichungstag der Patentschrift : **07.08.85**

(21) Anmeldenummer : **82107275.8**

(22) Anmeldetag : **11.08.82**

(51) Int. Cl.⁴ : **C 07 F 5/04**, C 10 M105/78 // (C10M105/78, 105:62)

(54) **Borsäureester aus alkoxylierten Diaminen oder Triaminen und deren Verwendung in hydraulischen Flüssigkeiten.**

(30) Priorität : **17.08.81 DE 3132372**

(43) Veröffentlichungstag der Anmeldung : **23.02.83 Patentblatt 83/08**

(45) Bekanntmachung des Hinweises auf die Patenterteilung : **07.08.85 Patentblatt 85/32**

(84) Benannte Vertragsstaaten : **DE FR GB IT NL SE**

(56) Entgegenhaltungen :
**US-A- 3 000 925**
**US-A- 3 030 405**
**US-A- 3 505 226**
**US-A- 3 598 855**

(73) Patentinhaber : **BASF Aktiengesellschaft**
**Carl-Bosch-Strasse 38**
**D-6700 Ludwigshafen (DE)**

(72) Erfinder : **Nohe, Heinz, Dr.**
**Ruppertsberger Strasse 11**
**D-6701 Meckenheim (DE)**
Erfinder : **Pachaly, Heinz, Dr.**
**Weinheimer Strasse 15**
**D-6703 Limburgerhof (DE)**
Erfinder : **Liebold, Gert, Dr.**
**Hundert Morgen 37**
**D-6803 Edingen-Neckarhausen (DE)**
Erfinder : **Pfitzner, Klaus, Dr.**
**Liebermannstrasse 6**
**D-6700 Ludwigshafen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 072 534 B1

Jouve, 18, rue St-Denis, 75001 Paris, France

**Beschreibung**

Hydraulische Flüssigkeiten, insbesondere Bremsflüssigkeiten, müssen bestimmte Normen, sog. Spezifikationen, erfüllen (z. B. DOT 4 des US Department of Transportation/Federal Motor Vehicle Safety Standard — FMVSS Nr. 116 bzw. SAE J 1703 Society of Automotive Engineers ; diese Spezifikationen werden auch im europäischen Bereich verwendet). Besonders wichtig sind dabei der Kochpunkt (Kp), der Naßkochpunkt (NKp) und die Viskosität, die für DOT 4 wie folgt festgelegt sind : Kp 230 °C ; NKp 155 °C ; Viskosität bei – 40 °C 1 800 $mm^2$/sec. Die entsprechenden Anforderungen für DOT 5 lauten : Kp 260 °C ; NKp 180 °C ; Viskosität bei – 40 °C 900 $mm^2$/sec.

Die auf dem Markt befindlichen DOT 4-Bremsflüssigkeiten gehen in ihren Eigenschaften über die Spezifikation hinaus : Kp ca. 250 °C, teilweise 260 °C ; NKp 160 bis 165 °C ; Viskosität (– 40 °C) : max. 1 500 $mm^2$/sec.

Bremsflüssigkeiten müssen ferner eine gute Schmierwirkung und hohe Oxidations- und Säurestabilität und somit eine gute Korrosionsinhibierung aufweisen. Handelsübliche Bremsflüssigkeiten bestehen daher in der Regel aus mehreren Komponenten wie Glykolethern als Grundbestandteil, Polyglykolen als Schmiermittel, Inhibitoren, z. B. Aminen für den Korrosionsschutz sowie Antioxidationsmitteln.

Der Spezifikation DOT 4 genügende Bremsflüssigkeiten enthalten meist zusätzlich Borsäureester zur Gewährleistung des erforderlichen hohen Naßkochpunktes. Entsprechende Borsäureester sind in den DE-OSen 17 68 933 und 29 01 835 beschrieben. Es besteht die Vorstellung, daß die (an sich hygroskopischen) Bremsflüssigkeiten gegen Wasseraufnahme weniger empfindlich sind, wenn sie Mittel enthalten, die — hier durch Verseifung — das Wasser chemisch binden, wobei Polyglykolether freigesetzt werden.

Die handelsüblichen Bremsflüssigkeiten, die insbesondere Methyltriglykol-orthoborat enthalten, sind noch verbesserungsfähig ; beispielsweise erfüllen sie die erforderlichen Spezifikationen und geforderten Eigenschaften wie Naßkochpunkt, Viskosität und Verdampfungsverlust nur bei einem verhältnismäßig hohen Gehalt an Bor, z. B. mehr als 0,7 Gew.% in Form der Borate und/oder durch Zugabe von beträchtlichen Mengen von Korrosionsinhibitoren, z. B. bis zu 5 Gew.% Aminen und/oder durch Zugabe von Dialkylethern. Wenn man die handelsüblichen Borate zugrundelegt, deren Anteil an der fertigen Bremsflüssigkeit bei 15 bis über 50 Gew.% liegt, entspricht dies einem Borgehalt von 0,7 bis über 1 Gew.%.

Es ist schon in der JA-A-133491/80, der DE-A-2 804 535 und der DE-A-2 931 794 vorgeschlagen worden, Borsäureester herzustellen und für Bremsflüssigkeiten zu verwenden, die gleichzeitig Amine darstellen.

Aus nicht näher erörterten Gründen werden dabei ausdrücklich solche stickstoffhaltige Borester bevorzugt, die Reste von Alkylenoxidaddukten von heterocyclischen oder cycloaliphatischen Monoaminen tragen ; Ester von Addukten von Diaminen werden als solche nicht erwähnt, sondern lediglich Pyrazol, Pyrazolin, Imidazol und 1,4-Diaminocyclohexan als Vertreter genannt.

Diese Diamine sind jedoch aus verschiedenen Gründen zur Herstellung von Borestern für Bremsflüssigkeiten weniger gut geeignet, da z. B. Pyrazol, Pyrazolin und Imidazol jeweils nur ein reaktionsfähiges Stickstoffatom besitzen und 1,4-Diaminocyclohexan in technischem Maßstabe bisher nicht zugänglich ist und im übrigen bei diesen Diaminen nicht alle Kennzahlen der Spezifikation gleichzeitig erfüllt werden.

Es wurden nun neue, für hydraulische Flüssigkeiten, insbesondere den Spezifikationen DOT 4 und DOT 5 genügende Bremsflüssigkeiten, geeignete Borester gefunden, die alle die geforderten Eigenschaften größtenteils mit einem relativ geringen Anteil an Bor erfüllen.

Die Erfindung betrifft stickstoffhaltige Borsäureester bzw. deren Gemische, erhältlich durch Umsetzung in beliebiger Reihenfolge von 1 Mol Orthoborsäure mit

A) 0,05 bis 1,5 Mol eines oxalkylierten Di- bzw. Triamins mit 1 bis 5 veresterbaren Hydroxylgruppen je Molekül, ausgewählt aus der Gruppe, bestehend aus oxalkyliertem Ethylendiamin, 1,2- oder 1,3-Propandiamin, einem α,ω-Diamin eines (Poly)glygolethers, Piperazin, Imadazolidin, Hexahydropyrimidin, 1,3- oder 1,4-Hexahydrodiazepin, den N-(2-Amino-ethyl- bzw. -propyl oder -butyl)- und N-(3-Aminopropyl)-derivaten von Morpholin, Pyrrolidin oder Piperidin bzw. Diethylentriamin, 1,2- oder 1,3-Dipropylentriamin, den Mono [N-(2-amino-ethyl bzw. -propyl oder -butyl)]- und Mono [N-(3-aminopropyl)]-derivaten von Piperazin, Imidazolidin, Hexahydropyrimidin, 1,3- oder 1,4-Hexahydrodiazepin bedeutet

B) bis zu 2,95 Mol eines Alkyl(poly)glykols der allgemeinen Formel I

$$HO—(A^1O)_m—(A^2O)_n—R \qquad (I),$$

in der

R eine Alkylgruppe mit 1 bis 4 Kohlenstoffatomen, $A^1$ und $A^2$ unabhängig voneinander eine Alkylengruppe mit 2 bis 4 Kohlenstoffatomen,

m und n unabhängig voneinander eine ganze Zahl von 0 bis 8, mit der Maßgabe, daß m + n mindestens 1 ist, bedeuten, oder deren Gemische und gegebenenfalls

C) bis zu 1 Mol eines Glykols

mit der Maßgabe, daß die Molmengen von A), B) und C) unter Berücksichtigung ihrer Hydroxylgruppenzahl einen vollständigen Ester der Borsäure bilden können, bis sich kein Wasser mehr abscheidet und Entfernung des Wassers.

Als α,ω-Diamine von (Poly)glykolethern können z. B. Diaminodiethylenglykol, Diaminotriethylenglykol oder Diaminotripropylenglykol eingesetzt werden.

Die Di- bzw. Triamine müssen zur erfindungsgemäßen Verwendung oxalkyliert sein, d. h. mit Ethylenoxid, 1,2-Propylenoxid oder einem Butylenoxid umgesetzt sein und somit 1 bis 5 veresterbare alkoholische Hydroxylgruppen im Molekül besitzen. Dabei können 3 Fälle unterschieden werden :

a) Diamine, die nicht vollständig oxalkyliert sind, aber nicht mehr als eine freie N-H-Gruppierung im Molekül aufweisen

b) Di- bzw. Triamine, die vollständig oxalkyliert sind

c) Di- bzw. Triamine, die einen höheren Oxalkylierungsgrad aufweisen (d. h. Umsetzung mit mehr Molen Alkylenoxid, als es den freien N-H-Gruppierungen entspricht).

Zur Verdeutlichung sind beispielhaft einige Strukturformeln der jeweiligen Verbindungsklassen angeführt, wobei R jeweils H, $CH_3$ oder $C_2H_5$ bedeutet :

a)

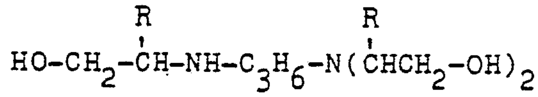

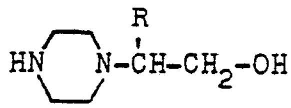

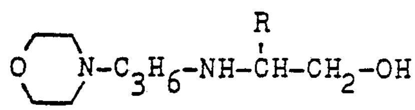

b)

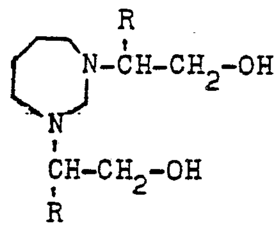

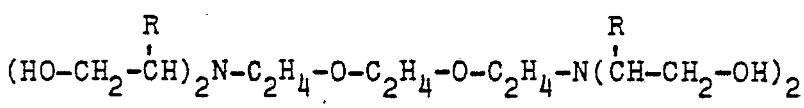

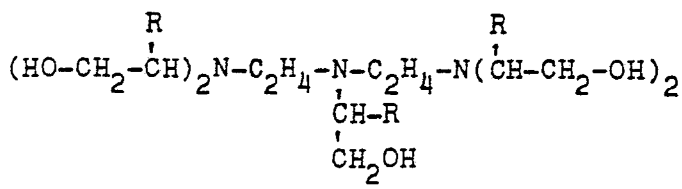

c)

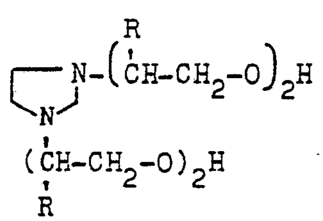

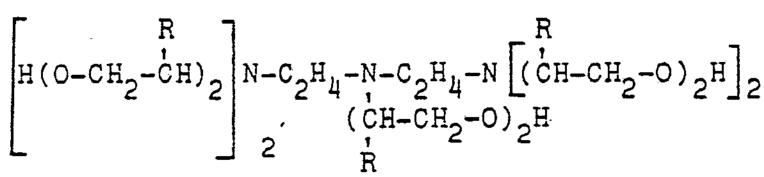

Soweit die zugrundeliegenden Amine das Strukturelement

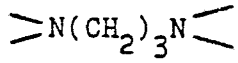

aufweisen, werden sie vorteilhaft durch Umsetzung von Ammoniak oder einem entsprechenden Monoamin mit Acrylnitril und nachfolgende Hydrierung des gebildeten Aminopropionitrils erhalten. Die übrigen Amine, ihre Herstellung und auch die Umsetzung von Aminen mit Alkylenoxiden (Oxalkylierung) sind bekannt, so daß darauf nicht weiter einzugehen ist.

Alkyl(poly)glykole der oben genannten Formel I sind die Monoether von Ethylen-, Propylen- oder Butylenglykol bzw. deren einheitlichen oder gemischten Oligomeren und einem einwertigen Alkanol mit 1 bis 4 Kohlenstoffatomen, dabei ist das Methyltriglykol bevorzugt.

Die erfindungsgemäßen Borsäureester können ferner unter Mitverwendung einfacher unveretherter Glykole oder deren Oligomeren hergestellt sein. Bevorzugt ist die Verwendung geringer Mengen von Diethylenglykol, Triethylenglykol oder gemischter Ethylen/Propylen-glykol-oligomerer, die auch im Handel erhältlich sind.

Die erfindungsgemäßen Borester sind in der Regel chemisch keine einheitlichen Verbindungen sondern Gemische, wie dies bei der Umsetzung mehrfunktioneller Verbindungen untereinander der Erfahrung entspricht.

Unabhängig von der Beschreibung der Ester durch ihre Ausgangsstoffe und das diese verbindende Herstellverfahren lassen sich jedoch Borester mit beispielsweise folgenden Strukturelementen als Bestandteile erfindungsgemäßer Mischungen erwarten :

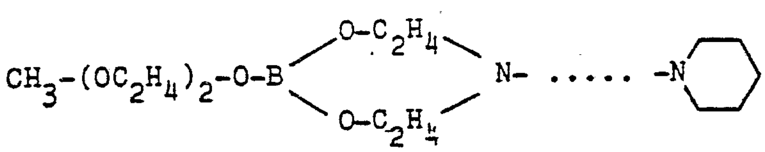

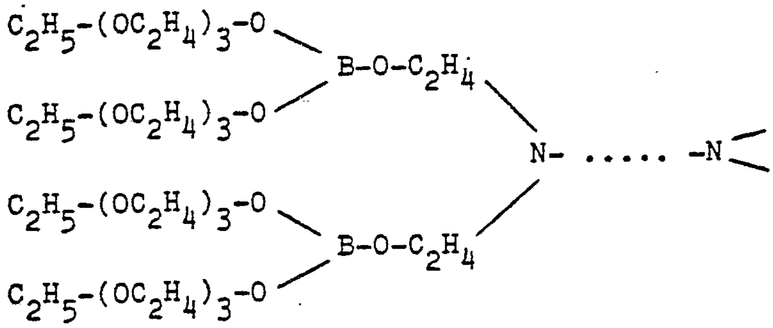

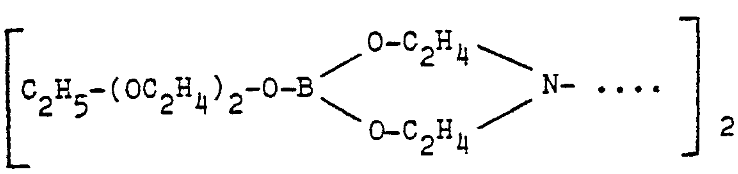

Je nach Mischungsverhältnis der Ausgangsstoffe A) bis C), d. h. im Verhältnis untereinander und zur Borsäure, erhält man demnach Verbindungen mit 1, 2, 3, 4 oder gar mehr Mol Borsäure im Molekül in geringerer Menge neben solchen, die z. B. nur 1 Mol Borsäure je Mol enthalten.

Das Mengenverhältnis der alkoholischen Reaktionspartner A), B) und C) richtet sich nach dem Verwendungszweck.

Bremsflüssigkeiten nach DOT 4 können mit relativ viskosen Borestern oder relativ hohen Mengen solcher Borester erhalten werden. Da die Viskosität von Borestern aus polyfunktionellen Aminen häufig höher liegt, können hier größere Mengen des Amins zur Veresterung verwendet werden.

Für DOT 4-Bremsflüssigkeiten setzt man z. B. ein — je Mol Borsäure —

A) 0,05 bis 1 Mol,
B) 1 bis 2,5 Mol,
C) 0 bis 0,3 Mol,

wobei A), B) und C) die obenstehenden Reaktionsteilnehmer bedeuten.

Für DOT 5-Bremsflüssigkeiten beträgt die Menge A) im allgemeinen nicht mehr als 0,5 Mol, während B) z. B. bis 2,95 Mol betragen kann.

Die Veresterung der Orthoborsäure wird in an sich bekannter Weise durchgeführt, indem man z. B. in die auf 90 °C erhitzte Mischung der Alkohole A) und B) und gegebenenfalls C) Orthoborsäure unter Rühren einträgt und unter vermindertem Druck die Temperatur allmählich steigert, bis das entstandene Wasser weitgehend abdestilliert ist. Dies ist in der Regel nach 3 bis 10 Stunden und nach Erreichen einer Temperatur von 110 bis 190 °C der Fall.

Es ist nicht erforderlich, vor der Veresterung das Oxalkylierungsprodukt A) zu isolieren.

Zur Herstellung von Bremsflüssigkeiten, die den Bedingungen der Spezifikationen genügen, werden die Borester mit Alkylpolyglykolethern und Polyglykolen gemischt.

Eine geeignete Bremsflüssigkeit besteht z. B. aus

5 bis 80 Gew.-% Borsäureester
20 bis 95 Gew.-% von Alkylpolyglykolethern
und bis zu 50 Gew.-% von Polyglykolen.

Die erfindungsgemäßen Borsäureester haben den Vorteil, daß eine geringere Menge (0,6 Gew.%) Bor in Form der Borate als bisher erforderlich in der handelsüblichen fertigen DOT 4-Bremsflüssigkeitsabmischung benötigt wird.

Eine vorteilhafte Wirkung der neuen Borsäureester besteht auch darin, daß infolge ihres relativ hohen Stickstoffgehalts geringere Mengen bzw. kein zusätzliches Amin für die Inhibierung und als Alkalireserve erforderlich ist. Auch die Zugabe von Dialkylethern entfällt.

Umsetzungsprodukte von Alkylenoxiden mit Aminen erhält man z. B. wie folgt :

Zur Herstellung der Tris(hydroxyethyl)verbindung des (2-Aminoethyl)ethanolamins werden unter Rühren 416 g (2-Aminoethyl)ethanolamin in Gegenwart von 1 g Ätzkali bei 110-165 °C innerhalb 8 Stunden mit 528 g Ethylenoxid umgesetzt.

Ausbeute : 943 g, d. h. 99,8 % der berechneten Menge.

Diese Verbindung wird nachstehend als A1 bezeichnet.

## Beispiel 1

In 236 g des Reaktionsproduktes A1 und 328 g Methyltriglykol werden unter Rühren bei 90 °C 124 g Orthoborsäure eingetragen und bis zu einem Druck von 2 mbar/200 °C Wasser abdestilliert ; dies ist nach 7 Stunden beendet.

Ausbeute : 530 g, d. h. 91,4 % der Theorie.

## Beispiel 2

47,2 g Umsetzungsprodukt A1, 853 g Methyltriglykol und 124 g Orthoborsäure werden wie in Beispiel 1 umgesetzt.

Ausbeute : 848 g, d. h. 92,8 % der Theorie.

## Beispiel 3

Unter Rühren werden 416 g (2-Aminoethyl)ethanolamin in Gegenwart von 1 g Ätzkali bei 120-170 °C innerhalb 15 Stunden mit 696 g 1,2-Propylenoxid umgesetzt.

Ausbeute : 1 106 g, d. h. 99,4 % der berechneten Menge (A2).

208,5 g Umsetzungsprodukt A2
984 g Methyltriglykol
186 g Orthoborsäure

werden wie vorstehend beschrieben, umgesetzt.

Ausbeute : 1 118 g, d. h. 91,9 % der Theorie.

## Anwendungsbeispiel

zur Beurteilung des Kochpunktes (Kp) bzw. Naßkochpunktes (NKp)

Die erfindungsgemäßen Borester wurden mit den nachstehend aufgeführten Mengen an Methyltriglykol versetzt und ergaben die in der Tabelle angegebenen Werte für Kp, NKp und Viskosität bei − 40 °C (V-40).

(Siehe Tabelle Seite 6 f.)

Tabelle

| Borat nach Beispiel | Gew.Teile Borester | Gew.Teile Methyltriglykol | Kp °C | NKp °C (+3.5Gew.% $H_2O$) | V $-_{2}40$ [$mm^2$/sec] |
|---|---|---|---|---|---|
| 1 | 20 | 80 | 253 | 181 | 1190 |
| 2 | 50 | 50 | 265 | 188 | 840 |
| 3 | 20 | 80 | 255 | 170 | 510 |

Beispiel 4

380 g (2,64 Mol) 4-(3-Aminopropyl)morpholin werden in Gegenwart von 0,5 g KOH innerhalb von 7 Stunden bei 120-170 °C mit 232 g (5, 28 Mol) gasförmig zugeführtem Ethylenoxid umgesetzt und liefern die Verbindung A3.

Ausbeute : 613 g (quantitativ).

348 g (1,5 Mol) der erhaltenen Verbindung A3 werden umgesetzt mit
984 g Methyltriglykol 6 Mol
186 g Orthoborsäure 3 Mol
Ausbeute an Borester : 1 356 g (quantitativ).

Formulierung einer Bremsflüssigkeit

25 Gew.% Borester nach Beispiel 4
35 Gew.% Methyltriglykol
30 Gew.% Ethyltriglykol
10 Gew.% Hexaglykol S (Umsetzungsprodukt von je 1 Mol 1,2-Propylenglykol mit 5 Mol Ethylenoxid).

Beispiel 5

23,2 g Verbindung A3 0,1 Mol
459 g Methyltriglykol 2,8 Mol
62 g Orthoborsäure 1,0 Mol
Ausbeute an Borester : 462 g, entsprechend 94,3 % der rechnerischen Ausbeute.

Formulierung einer Bremsflüssigkeit

57,5 Gew.% Borester nach Beispiel 5
42,5 Gew.% Methyltriglykol

Beispiel 6

Zu 456 g N-(3-Aminopropyl) morpholin werden in Gegenwart von 1 g KOH innerhalb von 10 Stunden bei 110 bis 190 °C 575 g 1,2-Butenoxid zugesetzt.

Ausbeute : 1 020 g, 98,7 % der Theorie. Das Umsetzungsprodukt wird mit A4 bezeichnet.

287 g Verbindung A4 1,5 Mol
984 g Methyltriglykol 6 Mol
186 g Orthoborsäure 3 Mol

Ausbeute an Borester : 1 374 g, d. h. 98,5 % der rechnerischen Ausbeute.

Formulierung einer Bremsflüssigkeit

30 Gew.% Borester nach Beispiel 6
32 Gew.% Methyltriglykol
20 Gew.% Methyltetraglykol
10 Gew.% Ethyltriglykol
8 Gew.% Triethylenglykol

Tabelle

Typische Eigenschaften der Bremsflüssigkeiten gemäß Beispielen 4 bis 6.

| | Formulierung gemäß Beispiel 4 | 5 | 6 |
|---|---|---|---|
| Kochpunkt [°C] | 253 | 269 | 258 |
| Naßkochpunkt [°C] (unter Zusatz von 3,5 Gew.% Wasser) | 162 | 185 | 169 |
| Viskosität bei -40°C [$mm^2$/s] | 1633 | 882 | 1410 |
| SBR-Quellung Vol.-% 70 h/120°C | + 7,9 | + 9,54 | + 5,91 |
| Verdampfungsverlust Gew.-% 72 h/100°C | 54,3 | 44,9 | 40,5 |

(Siehe Tabelle Seite 8 ff.)

Prüfergebnisse nach FMVSS 116 der Bremsflüssigkeitsformulierung gemäß Beispiel 6

| | Gemessene Werte (n. FMVSS 116) | Grenzwerte nach Spezifikation SAE J 1703 | FMVSS 116, DOT 3 |
|---|---|---|---|
| Viskosität, $mm^2/s$ | | | |
| bei - 40 °C | 1 410 | max. 1 800 | max. 1 500 (1 800/DOT 4) |
| bei + 100 °C | 2,3 | min. 1,5 | min. 1,5 |
| Kochpunkt, °C | 258 | min. 205 | min. 205 (230/DOT 4) |
| Kochpunktveränderung, °C | - 1 | max. 3; bei Kp 225 °C + 0,05 °C pro 1 °C | max. 3; bei Kp 225 °C + 0,05 °C pro 1 °C |
| Naßkochpunkt, °C | 169 | - | min. 140 (155/DOT 4) |
| pH-Wert, SAE | 8,4 | 7,0 - 11,5 | 7,0 - 11.5 |
| Kältetest | | | |
| 6 h/- 50 °C | | | |
| Aussehen | transparent | transparent | transparent |
| Sedimentation | keine | keine | keine |
| Aufsteigzeit der Luftblase s | 7 | max. 35 | max. 35 |
| Kältetest | | | |
| 144 h/- 40 °C | | | |
| Aussehen | transparent | transparent | transparent |
| Sedimentation | keine | keine | keine |
| Aufsteigzeit der Luftblase s | 2 | max. 10 | max. 10 |
| Wassertoleranztest | | | |
| 120 h/- 40 °C | | | |
| Aussehen | transparent | transparent | transparent |
| Sedimentation | keine | keine | keine |
| Aufsteigzeit der Luftblase s | 3 | max. 10 | max. 10 |
| Nach weiteren 24 h/+ 60 °C | | | |
| Aussehen | transparent | transparent | transparent |
| Sedimentation, Vol.-% | keine | max. 0,05/ 0,15 | max. 0,15 |

(Fortsetzung)

| | Gemessene Werte (n. FMVSS 116) | Grenzwerte nach Spezifikation SAE J 1703 | FMVSS 116, DOT 3 |
|---|---|---|---|
| SBR-Quellung 70 h/70 °C | | | |
| Mittlere Zunahme des Bodendurchmessers, mm | 0,35 | 0,15 - 1,4 | 0,15 - 1,4 |
| Änderung des Volumens, Vol.-% | + 3,94 | - | - |
| Abnahme der Härte, IRHD | 4 | max. 10 | max. 10 |
| Blasen, Klebrigkeit | keine | keine | keine |
| SBR-Quellung 70 h/120 °C | | | |
| Mittlere Zunahme des Bodendurchmessers, mm | 0,49 | 0,15 - 1,4 | 0,15 - 1,4 |
| Änderung des Volumens, Vol.-% | + 5,91 | - | - |
| Abnahme der Härte, IRHD | 6 | max. 15 | max. 15 |
| Blasen, Klebrigkeit | keine | keine | keine |
| Oxidationsbeständigkeit 168 h/70 °C | | | |
| Gewichtsänderung mg/cm² | | | |
| Aluminium | ± 0,00 | max. 0,05 | max. 0,05 |
| Gußeisen | ± 0,02 | max. 0,3 | max. 0,3 |
| Aussehen der Metalle | kein Aufrauhen kein Lochfraß | kein Aufrauhen kein Lochfraß | kein Aufrauhen kein Lochfraß |
| Aussehen der Flüssigkeit | klar | klar | klar |
| Sedimentation | keine | keine | keine |
| Verdampfungsverlust, Gew.-% | | | |
| 72 h/100 °C | 40,5 | max. 60 | max. 60 |
| 168 h/100 °C | - | max. 80 | max. 80 |
| Aussehen des Rückstandes | transparent | transparent | transparent |
| Sedimentation | keine | keine | keine |
| Fließpunkt des Rückstandes, s nach 1 h/ - 5 °C | 1 | max. 5 | max. 5 |

(Fortsetzung)

| | Gemessene Werte (n. FMVSS 116) | Grenzwerte nach Spezifikation SAE J 1703 | FMVSS 116, DOT 3 |
|---|---|---|---|
| Korrosionsprüfung | | | |
| 120 h/100 °C | | | |
| Gewichtsänderung, $mg/cm^2$ | | | |
| Weißblech | - 0,01 | max. 0,2 | max. 0,2 |
| Stahl | + 0,01 | max. 0,2 | max. 0,2 |
| Aluminium | ± 0,00 | max. 0,1 | max. 0,1 |
| Gußeisen | ∓ 0,03 | max. 0,2 | max. 0,2 |
| Messing | ± 0,00 | max. 0,4 | max. 0,4 |
| Kupfer | ∓ 0,00 | max. 0,4 | max. 0,4 |
| Aussehen der Metalle | kein Aufrauhen kein Lochfraß | kein Aufrauhen kein Lochfraß | kein Aufrauhen kein Lochfraß |
| Flüssigkeit | | | |
| Sedimentation | keine | keine | keine |
| Sedimentation bei Typprüfung, Vol.-% | 0,1 | max. 0,1 | max. 0,1 |
| Gelieren der Flüssigkeit | kein Gelieren | kein Gelieren | kein Gelieren |
| pH-Wert, SAE | 8,1 | 7,0 - 11,5 | 7,0 - 11,5 |
| SBR-Manschette | | | |
| Bodendurchmesseränderung, mm | - | max. 1,4 | max. 1,4 |
| Abnahme der Härte, IRHD | - | max. 15 | max. 15 |
| Dichte bei 20 °C, $g/cm^3$ DIN 51 757 | 1,0631 | | |
| Flammpunkt o.T., °C DIN 51 584 | 148 | | |
| Wassergehalt, Gew.% DIN 51 777 | 0,2 | | |

Beispiel 7

Durch Umsetzung von
124 g Orthoborsäure
404 g N,N-Bis(2-hydroxyethyl) amino-2-(N-pyrrolidinyl) ethan (Verbindung A5) und
356 g Ethyltriethylenglykol
wurde ein Borsäureester hergestellt, dem die nachstehende Formel zugeschrieben wird

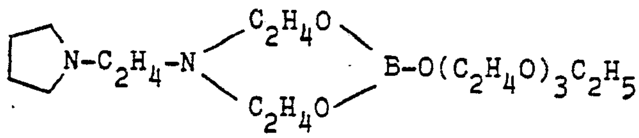

Beispiel 8

Durch Umsetzung von
124 g Orthoborsäure
272 g N,N-Bis(2-hydroxypropyl) amino-2-(N-piperidinyl) butan (Verbindung A6) und
656 g Methyltriethylenglykol
wurde ein Borsäureester hergestellt, dem die nachstehende Formel zugeschrieben wird

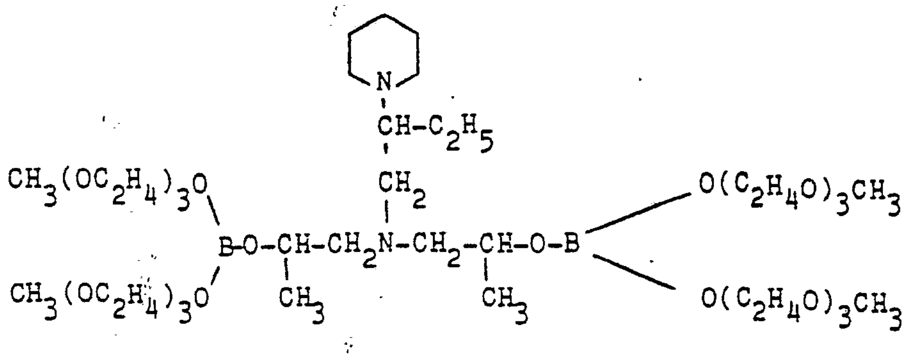

Durch Mischung von je 20 Gew. Teilen der Borester gemäß Beispielen 7 und 8 mit 80 Gew. Teilen Methyltriglykol erhält man Modellflüssigkeiten mit folgenden Eigenschaften.

| | Kochpunkt | Naßkochpunkt | Viskosität (-40°C) |
|---|---|---|---|
| Beispiel 7 | 250°C | 170°C | 1236 $mm^2$/sec |
| Beispiel 8 | 253°C | 167°C | 506 $mm^2$/sec |

Beispiel 9

258 g (2 Mol) N-(2-aminoethyl) piperazin werden unter Rühren, beginnend bei 100 °C (bis 140 °C) und atmosphärischem Druck innerhalb von 5 Stunden mit 264 g (6 Mol) Ethylenoxid umgesetzt.

Ausbeute : 522 g N,N-Bis(2-hydroxyethyl)amino-2-[1-(4-< 2-hydroxyethyl > piperazinyl)] ethan (A7).

Zu dieser Verbindung werden 492 g (3 Mol) Methyltriglykol gegeben und uner Rühren bei 90 °C 186 g (3 Mol) Orthoborsäure eingetragen. Innerhalb von 5 Stunden wird der Druck von zunächst 200 auf 2 mbar verringert und die Temperatur von 93 °C auf 154 °C erhöht ; dabei wird das gebildete Wasser abdestilliert.

Ausbeute an Borester : 1 000 g, entsprechend 96,8 % der berechneten Ausbeute.

Beispiel 10

Unter den in Beispiel 9 angegebenen Bedingungen werden

| | |
|---|---|
| 261 g Verbindung A7 | (1 Mol) |
| 296 g eines Umsetzungsproduktes aus 1 Mol Propylenglykol (−1,2) und 5 Mol Ethylenoxid | (1 Mol) |
| 656 g Methyltriglykol | (4 Mol) |
| 186 g Orthoborsäure | (3 Mol) |

umgesetzt.

Ausbeute an Borester: 1 215 g, entsprechend 98,2 % der berechneten Ausbeute.

Beispiel 11

150 g (0,75 Mol) N,N-Bis(3-aminopropyl) piperazin werden in Gegenwart von 0,25 g KOH innerhalb von 12 Stunden bei 140 bis 160 °C mit 132 g (3 Mol) Ethylenoxid umgesetzt (Verbindung A8).

Ausbeute: 273 g, entsprechend 97 % der berechneten Ausbeute.

| | |
|---|---|
| 273 g Verbindung A8 | (0,73 Mol) |
| 954 g Methyltriglykol | (5,8 Mol) |
| 180 g Orthoborsäure | (2,9 Mol) |

werden unter üblichen Bedingungen verestert.

Ausbeute an Borester: 1 225 g, entsprechend 98 % der berechneten Ausbeute.

Beispiel 12

Aus 0,1 Mol (26 g) des Umsetzungsprodukts von je 3 Mol Ethylenoxid und je 1 Mol N-(2-Aminoethyl) piperazin (A9), 2,7 Mol (443 g) Methyltriglykol und 1 Mol (62 g) Orthoborsäure wird ein Borsäureestergemisch hergetellt, das sich in einem weiten Bereich von Mischungsverhältnissen zur Herstellung von DOT 5-Bremsflüssigkeiten eignet.

Anwendungsbeispiel

| Borester gemäß | Borat | Methyltriglykol | Methyltetraglykol | Ethyltriglykol | Butyltriglykol | Hexaglykols | NKP °C | V -40°C [$mm^2/s$] |
|---|---|---|---|---|---|---|---|---|
| | Gewichtsteile | | | | | | | |
| 9 | 20 | 60 | | 20 | | | 172 | 1672 |
| 10 | 20 | 10 | 30 | 25 | 10 | 5 | 165 | 1615 |
| 11 | 30 | 70 | | | | | 164 | 1308 |
| 12 | 50 | 50 | | | | | 181 | 920 |

**Patentansprüche**

1. Stickstoffhaltige Borsäureester bzw. deren Gemische, erhältlich durch Umsetzung in beliebiger Reinhenfolge von 1 Mol Orthoborsäure mit

A) 0,05 bis 1,5 Mol eines oxalkylierten Di- bzw. Triamins mit 1 bis 5 veresterbren Hydroxylgruppen je Molekül, bestehend aus oxalkyliertem Ethylendiamin, 1,2- oder 1,3-Propandiamin, einem α,ω-Diamin eines (Poly) glykolethers, Piperazin, Imidazolidin, Hexahydropyrimidin, 1,3- oder 1,4-Hexahydrodiazepin, den N-(2-Amino-ethyl bzw. -propyl oder -butyl)- und N-(3-Aminopropyl)-derivaten von Morpholin, Pyrrolidin oder Piperidin bzw. Diethylentriamin, 1,2- oder 1,3-Dipropylentriamin, den Mono [N-(2-amino-ethyl bzw. -propyl oder -butyl)]- und Mono [N-(3-aminopropyl)]-derivaten von Piperazin, Imidazolidin, Hexahydropyrimidin, 1,3- oder 1,4-Hexahydrodiazepin,

B) bis zu 2,95 Mol eines Alkyl(poly)glykols der allgemeinen Formel I

$$HO—(A^1O)_m—(A^2O)_n—R \qquad (I)$$

in der

R eine Alkylgruppe mit 1 bis 4 Kohlenstoffatomen,

$A^1$ und $A^2$ unabhängig voneinander eine Alkylengruppe mit 2 bis 4 Kohlenstoffatomen,

m und n unabhängig voneinander eine ganze Zahl von 0 bis 8, mit der Maßgabe, daß m + n mindestens 1 ist, bedeuten, oder deren Gemische und gegebenenfalls,

C) bis zu 1 Mol eines Glykols,

mit der Maßgabe, daß die Molmengen von A), B) und C) unter Berücksichtigung ihrer Hydroxylgruppenzahl einen vollständigen Ester der Borsäure bilden können, bis sich kein Wasser mehr abscheidet und Entfernung des Wassers.

2. Bremsflüssigkeit, enthaltend 1 bis 80 Gew.% mindestens eines Borsäureesters gemäß Anspruch 1.

**Claims**

1. Nitrogen-containing boric acid esters and mixtures thereof, obtainable by reacting in any sequence 1 mole of orthoboric acid with

A) 0.05 to 1.5 moles of an oxyalkylated di- or triamine having 1 to 5 esterifiable hydroxyl groups per molecule, comprising oxyalkylated ethylenediamine, 1,2- or 1,3-propanediamine, imidzolidine, hexahydropyridine, 1,3- or 1,4-hexahydrodiazepine, an N-(2-amino-ethyl, -propyl or -butyl) or N-(3-aminopropyl) derivative of morpholine, pyrrolidine, piperidine, diethylenetriamine or 1,2- or 1,3-dipropylenetriamine, or a mono [N-(2-amino-ethyl, -propyl or -butyl)] or mono [N-(3-aminopropyl)] derivative of piperazine, imidazolidine, hexahydropyrimidine or 1,3- or 1,4-hexahydrodiazepine,

B) up to 2.95 moles of an alkyl(poly)glycol of the general formula I

$$HO—(A^1O)_m—(A^2O)_n—R \quad (I)$$

where

R is alkyl of 1 to 4 carbon atoms,

$A^1$ and $A^2$ independently of one another are alkylene of 2 to 4 carbon atoms,

m and n independently of one another are an integer from 0 to 8, with the proviso that the sum of m and is at least 1, or mixtures thereof, and optionally,

C) up to 1 mole of a glycol,

with the proviso that the molar amounts of A), B) and C), taking into account their respective OH numbers, can form a whole ester of boric acid, until water elimination ceases, and removing the water.

2. A brake fluid containing 1 to 80 % by weight of at least one boric acid ester as claimed in claim 1.

**Revendications**

1. Esters d'acide borique azotés ou leurs mélanges, pouvant être obtenus par la mise en réaction, dans n'importe quel ordre, de 1 mol d'acide orthoborique avec :

A) 0,05 à 1,5 mol d'une di- ou triamine oxalkylée contenant 1 à 5 groupes hydroxyle estérifiables par molécule, consistant en une éthylène-diamine, 1,2- ou 1,3-propane-diamine oxalkylée, une diamine-α,ω d'un éther (poly)glycolique, la pipérazine, l'imidazoline, l'hexahydropyrimidine, la 1,3- ou 1,4-hexahydrodiazépine, les dérivés N-(2-amino-éthylés, -propylés ou -butylés) et N-(3-aminopropylés) de la morpholine, la pyrrolidine ou la pipéridine ou de la diéthylène-triamine, la 1,2- ou 1,3-dipropylène-triamine, les dérivés mono-[N-(2-amino-éthylés ou -propylés ou -butylés)] et mono-[N-(3-aminopropylés)] de la pipérazine, de l'imidazoline, de l'hexahydropyrimidine, de la 1,3- ou 1,4-hexahydrodiazépine,

B) jusqu'à 2,95 mol d'un alkyl-(poly)glycol de formule générale I

$$HO—(A^1O)_m—(A^2O)_n—R \quad (I)$$

dans laquelle

R représente un groupe alkyle à 1-4 atomes de carbone,

$A^1$ et $A^2$ représentent, indépendamment l'un de l'autre, un groupe alkylène à 2-4 atomes de carbone et

m et n, indépendamment l'un de l'autre, sont mis pour un nombre entier de 0 à 8, avec cette condition que la somme m + n est au moins égale à 1, ou de mélanges de tels corps et, le cas échéant,

C) jusqu'à 1 mol d'un glycol,

avec cette condition que les quantités molaires de A), B) ou C) puissent, en raison du nombre de leurs groupes hydroxyle, former un ester complet de l'acide borique,
jusqu'à ce qu'il ne se sépare plus d'eau, et par l'élimination de l'eau.

2. Liquide de frein, contenant 1 à 80 % en poids d'au moins un ester d'acide borique selon la revendication 1.